# EUROPEAN PATENT SPECIFICATION

(11) **EP 2 954 360 B1**
(45) Date of publication and mention of the grant of the patent: **09.01.2019**
(21) Application number: 14704110.7
(22) Date of filing: 07.02.2014
(51) Int. Cl.: G02B 6/44, H02G 15/013

(54) **SEPARABLE SEALING AND RETENTION ARRANGEMENT**
TRENNBARE DICHTUNGS- UND HALTEANORDNUNG
AGENCEMENT D'ÉTANCHÉITÉ ET DE MAINTIEN SÉPARABLE

(30) Priority: 08.02.2013 US 201361762565 P; 18.10.2013 US 201361892768 P
(43) Date of publication of application: 16.12.2015
(73) Proprietor: CommScope Connectivity Belgium BVBA, 3010 Kessel-Lo (BE)
(72) Inventor: VANHENTENRIJK, Robert, B-3020 Winksele (BE); LIEFSOENS, Ronnie Rosa Georges, B-3080 Tessenderlo (BE); THEYS, Steven Hugo, M., B-3220 Kortrijk-Dutsel (BE)
(74) Representative: Murgitroyd & Company
(86) International application number: PCT/EP2014/052393
(87) International publication number: WO 2014/122246

(56) References cited:
- US-A1- 2013 020 771
- "SCG-8C18 Gel Splice Closure p/n 206-431, Issue 2", , 1 October 2012 (2012-10-01), pages 1-12, XP055117227, Retrieved from the Internet: URL:http://csmedia.corning.com/opcomm/Reso urce_Documents/SRPs_rl/206-431.pdf [retrieved on 2014-05-09]

## Description

### Background

Some optical cable organizers include closures housing an organizer. Cables (e.g., feeder cables, drop cables, and blown fiber tubes) are routed into ports of the closure and secured to a base of the closure. The cables also can be sealed within the ports using gel blocks. Fibers of the cables are broken out from outer jackets or blown fiber tubes and routed to the organizer (e.g., for splicing and/or storage). For example, the fibers can be spliced at management trays that are pivotally mounted to the organizer. US 2013/0020771 discloses a cable closure system incorporating a gel sealing device, according to the state of the art.

Improvements are desired.

### Summary

The disclosure relates to a separable sealing and retention arrangement that secures cables (e.g., drop cables, blown fiber tubes, or other such optical media) at one or more ports of a cable closure. The sealing and retention arrangement includes a retention block for inhibiting axial pull-out of the cables from the closure and a gel block for sealing the drop cables at the ports. The gel block is separable from the retention block to enable the addition, rearrangement, and/or replacement of one or more cables at the ports without disconnecting the retention block from the closure. Accordingly, cables can be added, moved, or replaced without subjecting the installed cables to axial pull loads.

In some examples, a cable closure system includes a sealing and retention arrangement mountable to a base of a closure at a cable port. The sealing and retention arrangement includes a gel block configured to seal a plurality of cables (e.g., drop cables, blown fiber tubes, etc.) within the cable port; and a cable retention block having open-ended, outwardly-facing slots configured to retain the cables at the base. A first mounting arrangement mounts the cable retention block to the base. A second mounting arrangement releasably mounts the gel block to the cable retention block. Releasing the gel block from the retention block and deactivating the gel block enables the gel block to be removed from the port while the retention block remains attached to the base by the first mounting arrangement.

An example method of using the cable closure system includes releasing the second mounting arrangement to disconnect the gel block from the retention block; deactivating the gel block to decompress the gel seal; sliding the gel block out of the port and away from the cable retention block; adding a new cable within the port; sliding the gel block back into the port; remounting the gel block to the cable retention block with the second mounting arrangement; and reactivating the gel seal.

A strength member fixation system may also be utilized in the cable retention block. One example strength member used in cables is aramid yarns or fibers.

Various spring clips for retaining the cables are disclosed. In some embodiments, the spring clip is made of metal. In some further embodiments, the spring clip includes a coating on the areas which engage the cable.

A variety of additional inventive aspects will be set forth in the description that follows. The inventive aspects can relate to individual features and to combinations of features. It is to be understood that both the forgoing general description and the following detailed description are exemplary and explanatory only and are not restrictive of the broad inventive concepts upon which the embodiments disclosed herein are based.

### Brief Description of the Drawings

The accompanying drawings, which are incorporated in and constitute a part of the description, illustrate several aspects of the present disclosure. A brief description of the drawings is as follows:
FIG. 1 is a perspective view of an example cable closure including a cable sealing and retention arrangement aligned with a cable port defined in the closure;
FIG. 2 is a perspective view of the example cable sealing and retention arrangement of FIG. 1 holding a plurality of drop cables;
FIG. 3 is a perspective view of the cable closure of FIG. 1 with the cable sealing and retention arrangement mounted in the cable port;
FIG. 3A is an enlarged view of a portion of FIG. 3 showing the cable sealing and retention arrangement;
FIG. 4 is a perspective view of the cable sealing and retention arrangement of FIG. 2 with the drop cables removed for ease in viewing;
FIG. 5 is a perspective view of an example gel block suitable for use with the cable sealing and retention arrangement of FIG. 4;
FIG. 6 is an exploded view of a gel block of FIG. 5;
FIG. 7 is a top perspective view of a retention block suitable for use with the cable sealing and retention arrangement of FIG. 4;
FIG. 8 is a bottom perspective view of the retention block of FIG. 7;
FIG. 9 is an exploded view of the retention block of FIG. 7;
FIG. 10 shows a portion of the gel block of FIG. 5 aligned with the retention block of FIG. 7;
FIG. 11 shows sliding clip members exploded laterally outwardly from the retention block of FIG. 7 in alignment with attachment members;
FIG. 12 is a bottom perspective view of the clip members, retention block, and gel block of FIG. 11;
FIG. 13 is a perspective view of the closure of FIG. 1 with the cable sealing and retention arrangement disassembled so that the retention block is secured to the base and the gel block has been removed from the port;
FIG. 14 is an enlarged view of a portion of FIG. 13;
FIG. 15 is a perspective view of an example clip arrangement suitable for use in the retention block of FIG. 7;
FIG. 16 is an enlarged view of a portion of FIG. 15;
FIG. 17 is a perspective view of an example clip arrangement suitable for use in the retention block of FIG. 7;
FIG. 18 is an enlarged view of a portion of FIG. 17;
FIG. 19 is a perspective view of an insertion tool aligned with a port of a cable sealing and retention arrangement;
FIG. 19A is a perspective view of the insertion tool of FIG. 19;
FIG. 20 shows the insertion tool positioned within the gel block of the sealing and retention arrangement of FIG. 19;
FIG. 21 shows a cable aligned with the insertion tool of FIG. 20;
FIG. 22 shows the cable of FIG. 21 inserted within the tool;
FIG. 23 shows the insertion tool of removed from the cable of FIG. 22;
FIG. 24 shows an alternative spring clip arrangement in perspective view;
FIG. 25 shows the alternative spring clip arrangement of FIG. 24 in side view;
FIG. 26 is a perspective view of an alternative retention block suitable for use with the cable sealing and retention arrangement;
FIG. 27 shows the cable sealing and retention arrangement with two cables inserted into the arrangement;
FIG. 28 shows the cable sealing and retention arrangement fully loaded with cables, and including a strength member fixation arrangement;
FIG. 29 is an enlarged view of one of the strength member fixation arrangements;
FIG. 30 is a cross-sectional view through a portion of the cable retention block of FIGS. 26-29 showing the strength member fixation arrangement in the process of fixing to strength members of two cables;
FIG. 31 shows an enlarged portion of a spring clip arrangement with coated ends for engaging the cable in the retention block.

### Detailed Description

Reference will now be made in detail to exemplary aspects of the present disclosure that are illustrated in the accompanying drawings. Wherever possible, the same reference numbers will be used throughout the drawings to refer to the same or like parts.

In general, the disclosure relates to a sealing and retention arrangement that secures cables (e.g., drop cables, blown fiber tubes, etc.) at one or more ports of a cable closure. The sealing and retention arrangement includes a retention block inhibiting axial pull-out of the cables from the closure. The sealing and retention arrangement also includes a gel block sealing around the cables at the ports to inhibit ingress of contaminants into the closure. The gel block is separable from the retention block to enable the addition and/or replacement of one or more cables at the ports without disconnecting the retention block from the closure. Throughout the disclosure, the cables will be referred to as "drop cables" for convenience. It will be understood, however, that any type of cables can be managed by the sealing and retention arrangement.

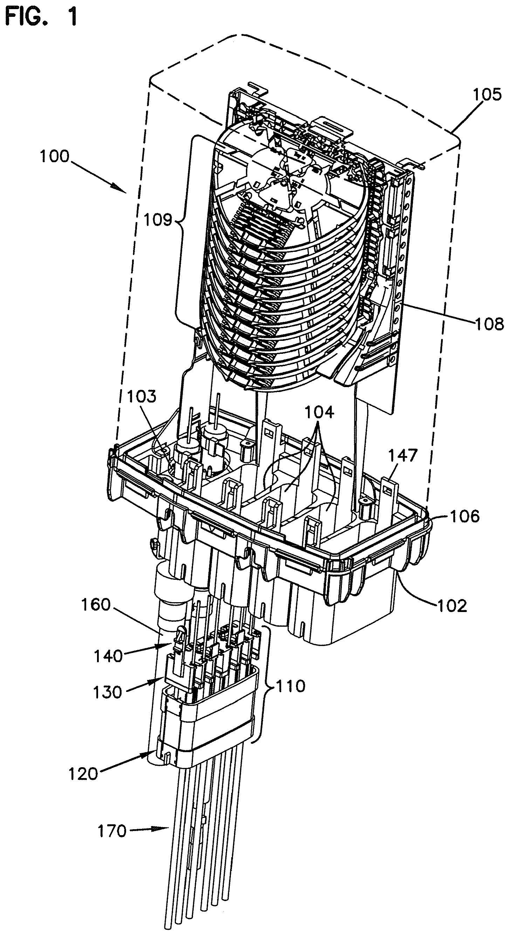

Referring to FIG. 1, one example cable closure 100 receiving one or more feeder cables 160 and one or more drop cables 170 is shown. The cable closure 100 includes a base 102 defining at least one feeder cable port 103 and at least one drop cable port 104. In the example shown, the base 102 defines four drop cable ports 104. In other implementations, however, the closure 100 can receive blown fiber tubes or other types of optical cables at the cable port 104. A dome 105 (shown schematically with dashed lines) is configured to mount to the base 102. A gasket or other seal 106 extends around a periphery of the base 102 and/or the open end of the dome 105 to provide sealing between the base 102 and the dome 105. A cable organizer 108 is attached to the base 102 and is enclosed by the dome 105 when the dome 105 is mounted to the base 102. One or more optical components (e.g., fiber management trays 109, bend radius limiters, routing guides, etc.) can be mounted to the cable organizer 108.

Two feeder cables 160 are shown held at the feeder cable port 103 in the base 102 of FIG. 1. The drop cable ports 104 are shown empty. A sealing and retention arrangement 110 is shown positioned outside of one of the drop cable ports 104 ready to be inserted therein. The sealing and retention arrangement 110 includes a gel block 120 and a retention block 130. The drop cables 170 are routed through and sealed by the gel block 120; and are held in axially fixed positions by the retention block 130. For example, outer jackets 172 of the drop cables 170 can be held at the retention block 130 and optical fibers 174 of the drop cables 170 can extend towards the cable organizer 108. The sealing and retention arrangement 110 includes a first mounting arrangement 140 that is configured to secure the sealing and retention arrangement 110 (and hence the drop cables 170) to the base 102 of the closure 100. In some implementations, the first mounting arrangement is releasable to enable selective removal of the retention block 130 from the base 102.

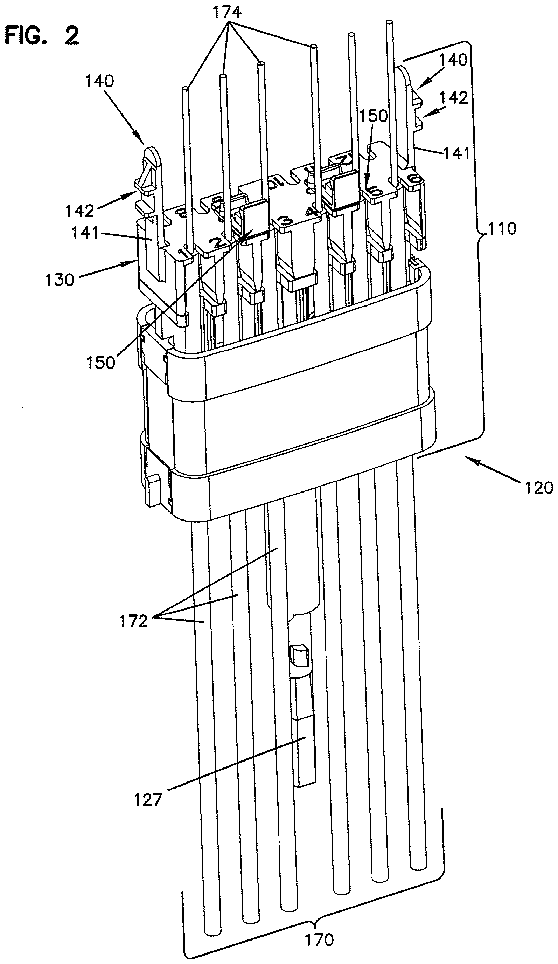

FIG. 2 illustrates one example sealing and retention arrangement 110 including a gel block 120 and a retention block 130. In some implementations, the gel block 120 is selectively removable from the retention block 130. As will be described in more detail herein, a second mounting arrangement 150 selectively secures the gel block 120 to the retention block 130. When the second mounting arrangement 150 is released or removed from the sealing and retention arrangement 110, the gel block 120 can be moved away from the retention block 130 along the axial lengths of the drop cables 170 held thereat.

As shown in FIG. 2, six drop cables 170 are held by the sealing and retention arrangement 110. The gel block 120 surrounds the outer jackets 172 of the drop cables 170 in preparation for sealing around the outer jackets 172 as will be described in more detail herein. The drop cables 170 are retained by their outer jackets 172 at the retention block 130 as will be described in more detail herein. Optical fibers 174 of the drop cables 170 protrude from the retention block 130 towards the closure 100 (see FIG. 1). The first mounting arrangement 140 includes retaining arms 141 that also extend towards the closure 100. Latching arrangements 142 are disposed at distal ends of the retaining arms 141 as will be described in more detail herein.

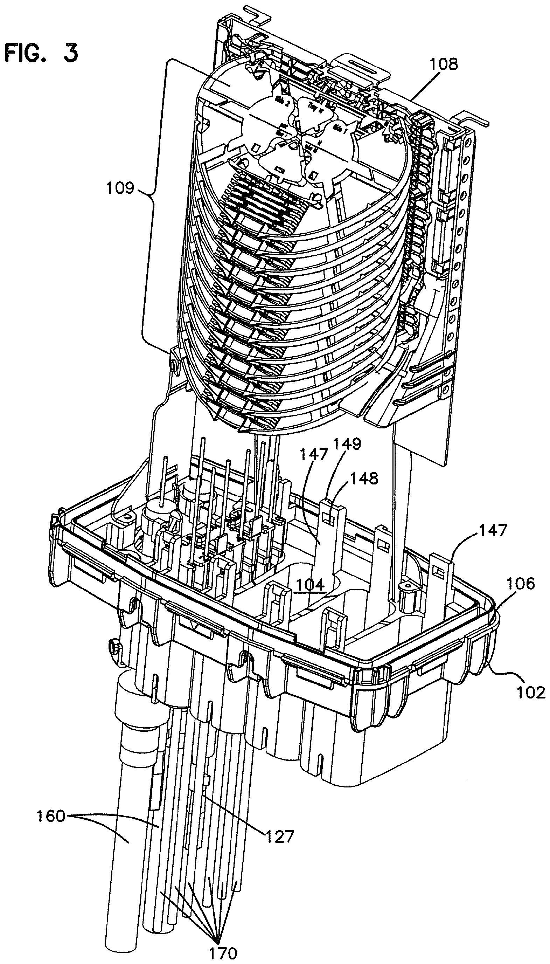

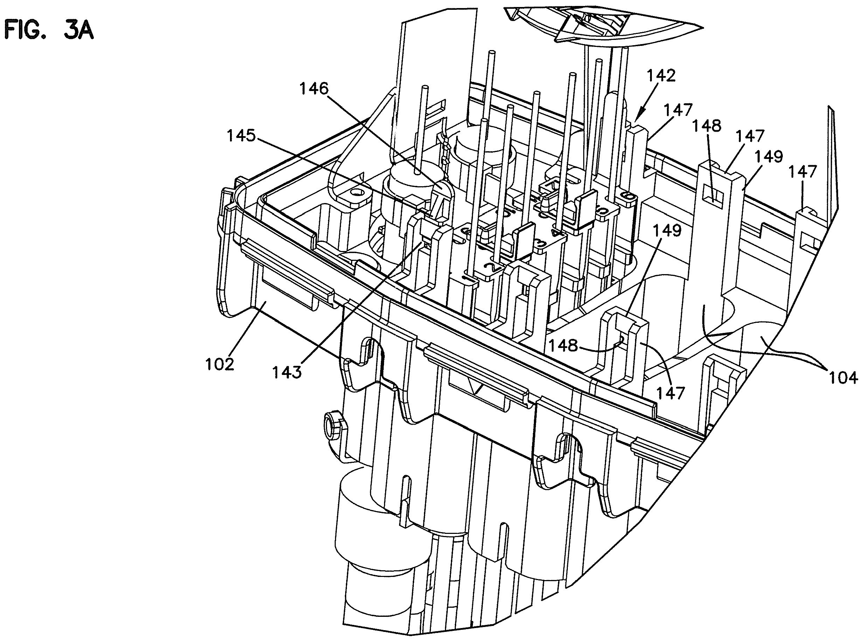

FIG. 3 illustrates the sealing and retention arrangement 110 of FIG. 2 installed at the closure 100. The sealing and retention arrangement 110 is disposed within one of the drop cable ports 104 so that the gel block 120 is surrounded (e.g., protected) by the base 102 and the retention block 130 is disposed at least partially within an interior of the dome 105 above the base 102. As best shown in FIG. 3A, the latching arrangements 142 of the retaining arms 141 are engaged with retainers 147 disposed at the base 102. In some implementations, at least one of the latching arms 141 and the retainers 147 is flexible to enable the latching arrangements 142 to slide along the retainers 147. The latching arrangements 142 are configured to be snap-fit to distal ends of the retainers 147 to hold the sealing and retention arrangement 110 to the base 102.

To insert the sealing and retention arrangement 110 within the port 104, the sealing and retention arrangement 110 is slid axially over the drop cables 170. The gel block 120 remains deactivated during the sliding to enable the drop cables 170 to pass through the gel block 120. When the sealing and retention arrangement 110 is secured to the base 102 (e.g., the retaining arms 141 lock to the retainers 147), the gel block 120 can be activated (e.g., by activation member 127). When the gel block 120 is activated, the gel block 120 seals against the outer jackets 172 of the drop cables 170 and against the inner wall of the cable port 104, which interferes with axial movement of the gel block 120 relative to the drop cables 170.

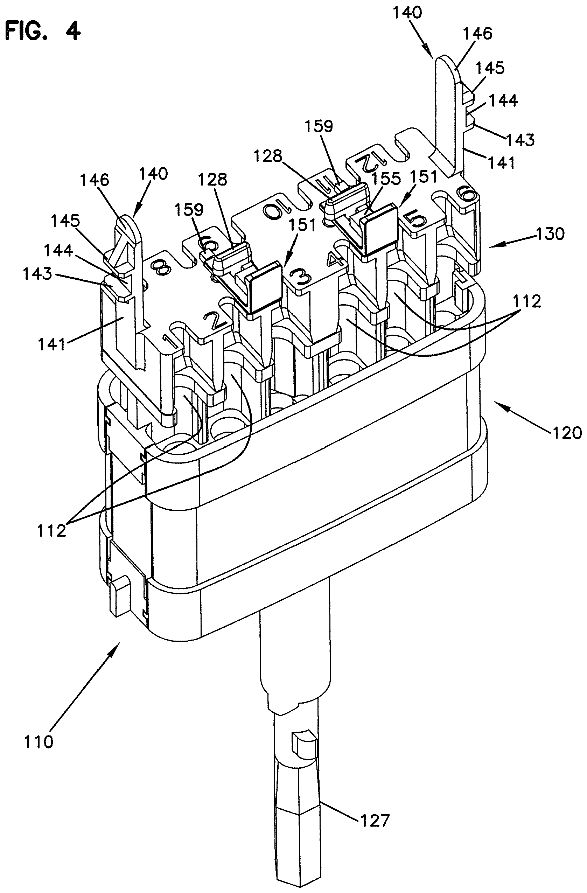

FIG. 4 illustrates one example sealing and retention arrangement 110 without any drop ports 170 contained therein. The sealing and retention arrangement 110 defines a plurality of passages 112 through which drop cables 170 can be routed. The passages 112 extend through both the gel block 120 and the retention block 130. The first mounting arrangement 140 is visible on the sealing and retention arrangement 110 in FIG. 4. In the example shown, the latching arrangements 142 are the retaining arms 141 including a latching stop 143, a latching hook 145, and a latching recess 144 therebetween. A grip portion 146 extends upwardly from the latching hook 145. In certain implementations, the latching hook 145 defines a tapered section to facilitate camming the retaining arms 141 over the retainers 147.

As shown in FIG. 3, the latching stops 143 of the retaining arms 141 are configured to extend through apertures 148 defined in the retainers 147 of the base 102. The latching hooks 145 are configured to snap-over the seating surfaces 149 of the retainers 147. Portions of the retainers 147 fit in the latching recesses 144 between the stops 143 and the hooks 141. The stops 143 and hooks 145 cooperate to hold the retaining arms 141 to the retainers 147, thereby holding the sealing and retention arrangement 110 to the base 102.

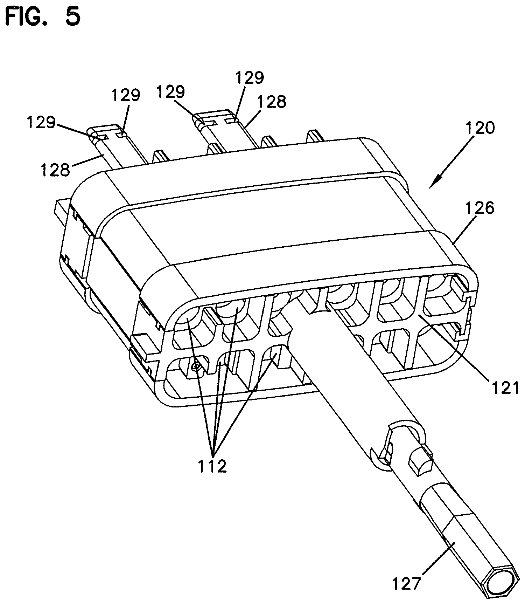

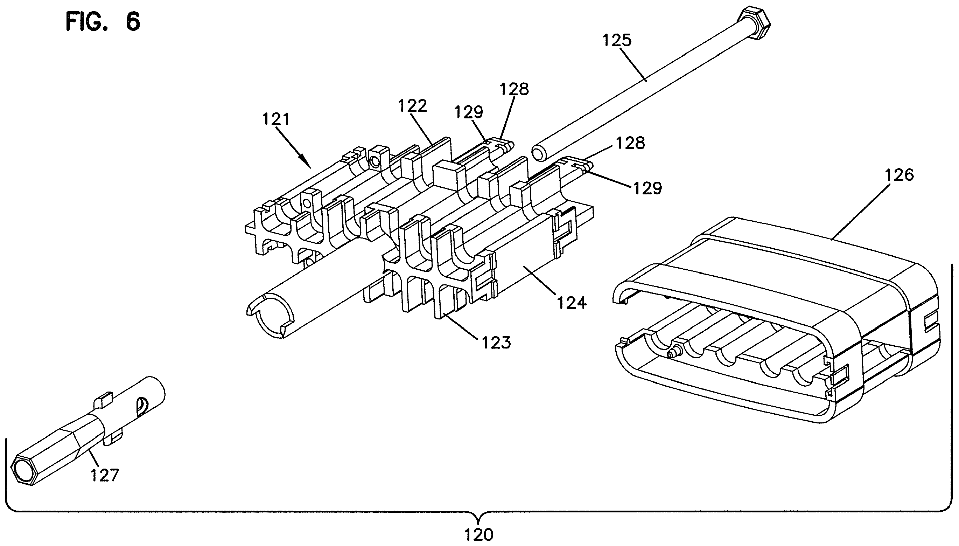

FIGS. 5 and 6 illustrate one example gel block 120 suitable for forming part of the sealing and retention arrangement 110. The gel block 120 includes an intermediate assembly 121 configured to be surrounded by a wrap-around member 126. One or more extensions 128 are disposed on the intermediate assembly 121. In the example shown, each extension 128 has a generally obround transverse cross-sectional shape. In other implementations, each extension 128 can have a rectangular, oval, round, or any other desired transverse cross-sectional shape. One or more slots 129 are defined towards distal ends of the extensions 128. For example, each extension 128 can include slots 129 at opposite sides of the extension 128 towards the distal end thereof.

The intermediate assembly 121 includes a top plate 122, a bottom plate 123, gel seal 124 and a rod 125. The top plate 122, bottom plate 123, and gel seal 124 are shaped to receive drop cables 170. For example, these components can define open channels along which drop cables 170 can be routed. The gel seal 124 is positioned between the top and bottom plates 122, 123 and the rod 125 extends through the gel seal 124 and both plates 122, 123 to hold these components together. An activation device 127 couples to the rod 125 to selectively loosen or tighten the rod 125. Tightening the rod 125 draws the plates 122, 123 closer together, thereby compressing the gel seal 124. Loosening the rod 125 enables the plates 122, 123 to move apart, thereby releasing the gel seal 124.

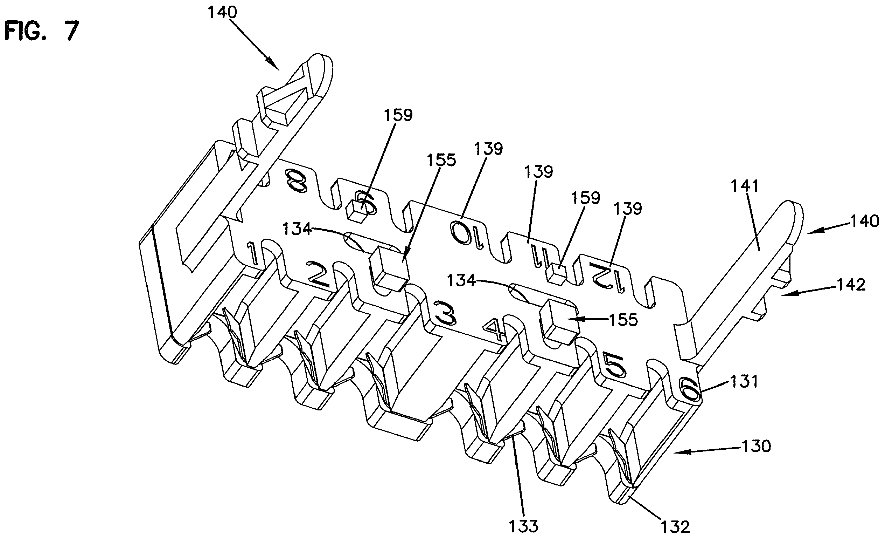

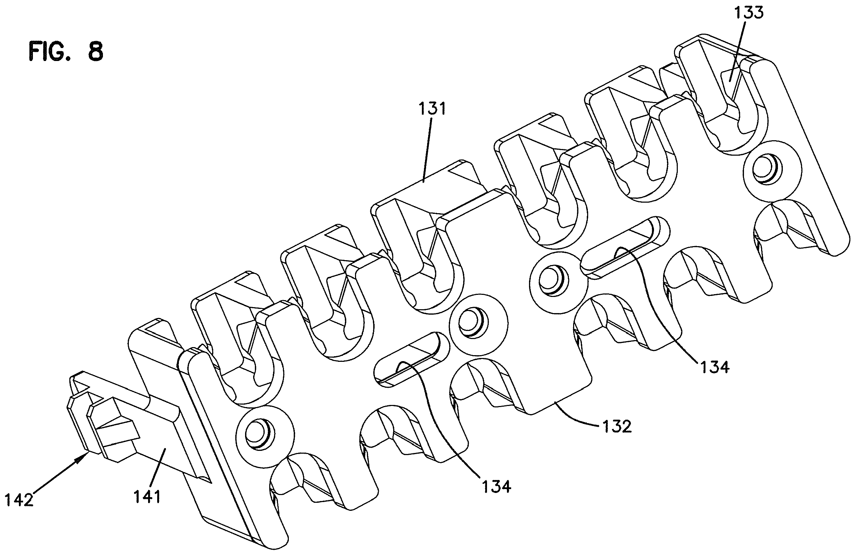

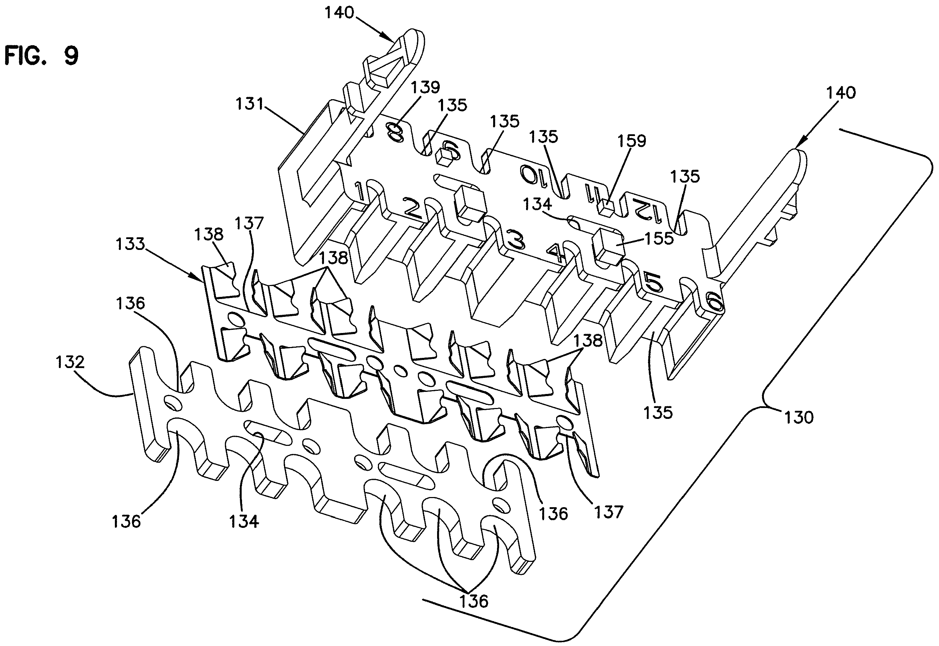

FIGS. 7-9 illustrate one example retention block 130 suitable for forming part of the sealing and retention arrangement 110. The retention block 130 includes a spring clip arrangement 133 sandwiched between a first piece 131 and a second piece 132. In the example shown, fastener openings (FIG. 8) extend through all three pieces to enable fasteners to hold the retention block 130 together. In other implementations, however, the pieces 131-133 can be latched, friction-fit, or otherwise secured together. The spring clip 133 includes a plurality of sprung flanges 138 that cooperate to define slots 137 through which the drop cables 170 can extend. The sprung flanges 138 inhibit axial movement of the drop cables 170 through the slots 137 while enabling selective lateral movement of the drop cables 170.

Each of these pieces 131-133 defines open-ended channels or slots in which drop cables 170 can be disposed as will be described in more detail herein. For example, the first piece 131 can define open-ended slots 135 align opposite sides of the periphery. In certain implementations, each of the open-ended slots 135 includes a number 139 or other indicia for labeling the ports 112 of the sealing and retention arrangement 110. The second piece 132 defines open-ended slots 136 around opposite sides of the periphery that align with the slots 135 of the first piece 135. The spring clip 133 also defines open-ended slots 137 along opposite sides of the periphery that align with the slots 135, 136. The open-ended slots 135-137 enable drop cables 170 to be laterally mounted to the retention block 130 instead of requiring the drop cables 170 to be axially threaded therethrough.

The first mounting arrangement 140 can be mounted to or form part of the first piece 131 of the retention block 130. Through-holes 134 can extend through the first and second pieces 131, 132 to enable the extensions 128 of the gel block 120 to extend fully through the retention block 130. In certain implementations, the spring clip arrangement 133 also can define the through-holes 134. Parts of the second mounting arrangement 150 also can be mounted to the retention block 130. The second mounting arrangement 150 interacts with the gel block extensions 128 to selectively retain the gel block 120 at the retention block 130.

The second mounting arrangement 150 includes one or more attachment members 155 which are disposed on and extend outwardly from the first piece 131 of the retention block 130. Each of the attachment members 155 aligns with one of the through-openings 134 defined through the retention block 130. Each attachment member 155 includes a top section 157 and a narrow section 156 extending between the top section 157 and the first piece 131 of the retention block 130. Block members 159 are disposed on the first piece 131 of the retention block 130 on opposite sides of the through-holes 134 from the attachment members 155.

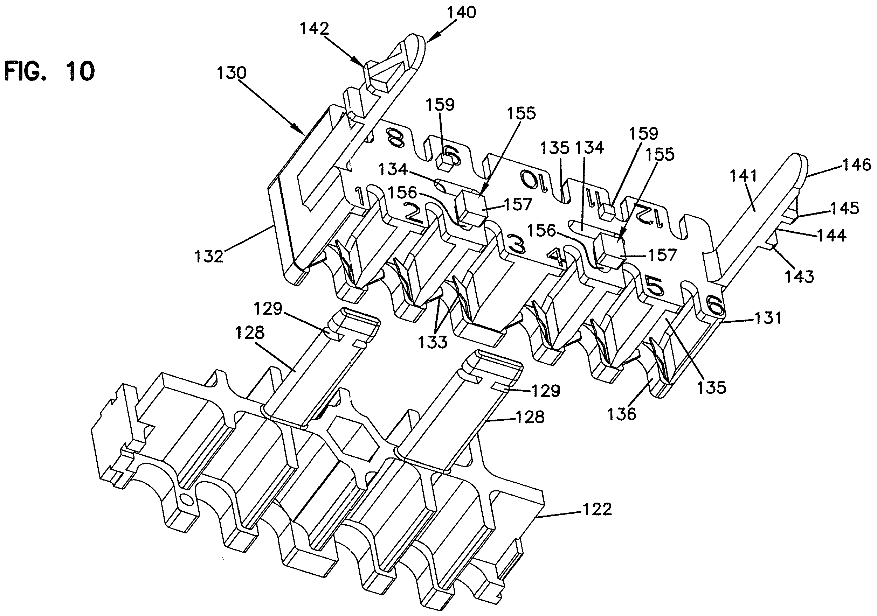

FIGS. 10-12 illustrate how second mounting arrangement 150 releasably holds the gel block 120 to the retention block 130. For example, in FIG. 10, the retention block 130 is shown exploded outwardly from the top plate 122 of the gel block 120. The extensions 128 of the top plate 122 are aligned with the through-openings 134 of the retention block 130. The extensions 128 are configured to be slid through the through-openings 134 from the bottom of the retention block 130 (e.g., the second piece 132) to the top of the retention block 130 (e.g., the first piece 131). In certain implementations, the extensions 128 also slide through the spring clip 133.

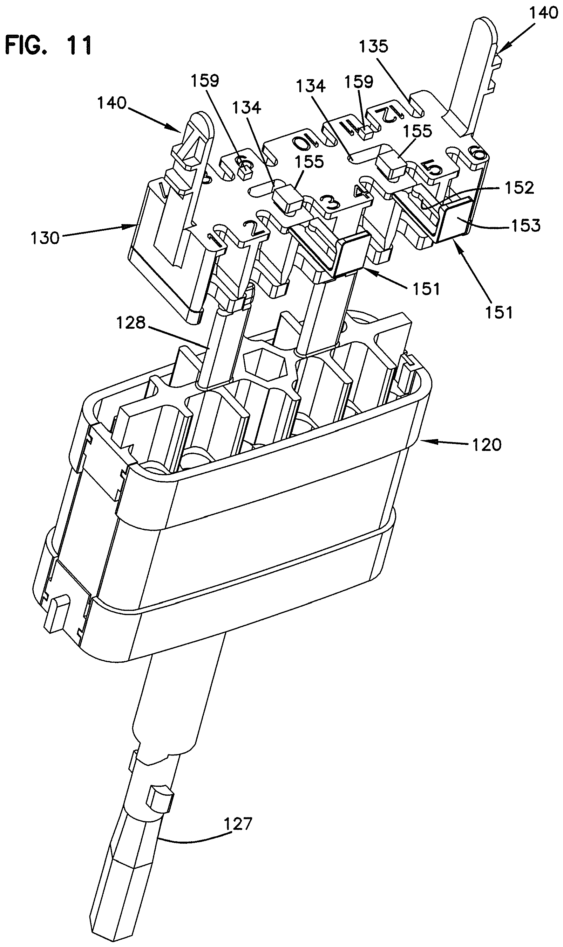

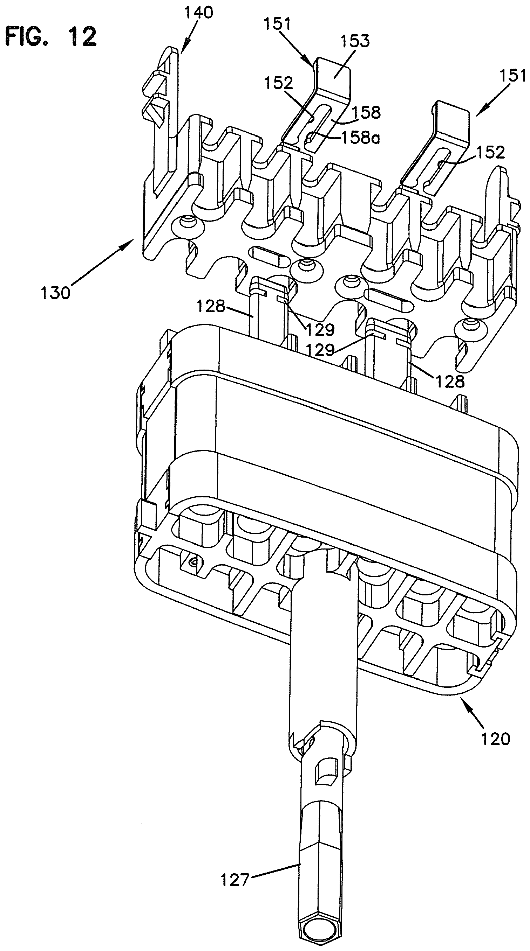

FIGS. 11 and 12 illustrate sliding clip members 151 of the second mounting arrangement 150 exploded laterally outwardly from the retention block 130. The clip members 151 are configured to be slid between locking and unlocking positions. The sliding clip members 151 each include flexible fingers 158 that extend outwardly from a handle 153. The fingers 158 are spaced apart to define an open-ended slot 152. Bumps 158a can be provided at distal ends of the fingers 158 to facilitate outward flexing of the fingers 158 when camming over surfaces when sliding between the locking and unlocking positions. The bumps 158a also can aid in retaining the clip members 151 against lateral sliding from the locking position to the unlocking position.

As shown in FIG. 11, the clip members 151 are positioned relative to the retention block 130 so that the open-ended slot 152 laterally aligns with the narrow section 156 of the attachment members 155. As shown in FIG. 4, the slot 152 also aligns with the slots 129 defined in the opposite ends of the gel block extensions 128 when the extensions 128 are disposed within the through-openings 134. The clip members 151 are configured to be slid forwardly so that the fingers 158 cam around opposite sides of the narrow sections 156 of the attachment members 155 and slide through slots 129 of the extensions 128. The top section 157 of each attachment member 155 holds the fingers 158 to the retention block 130. As shown in FIG. 4, the bumps 158a may snap around the backs of the extensions 128 to inhibit sliding removal of the clips 151 from the extensions 128. In certain implementations, the distal end of at least one finger 158 may engage one of the block members 159 to inhibit continued sliding of the clip member 151.

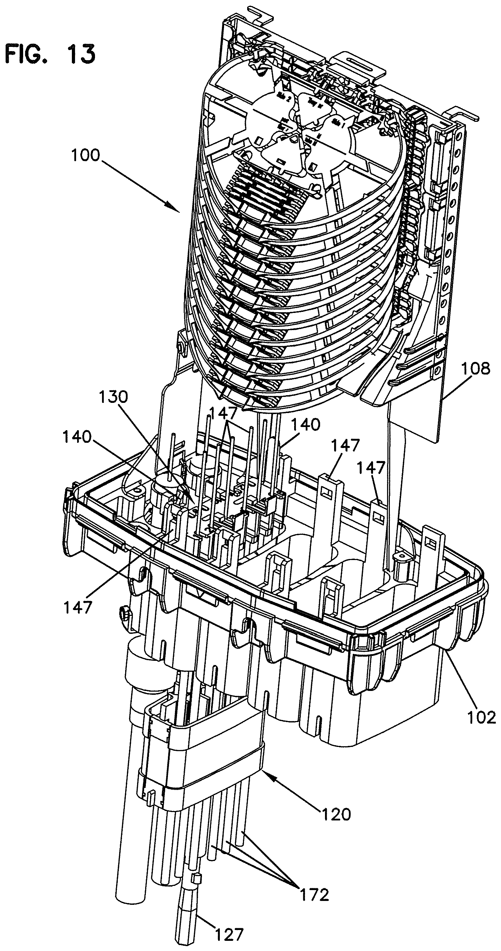

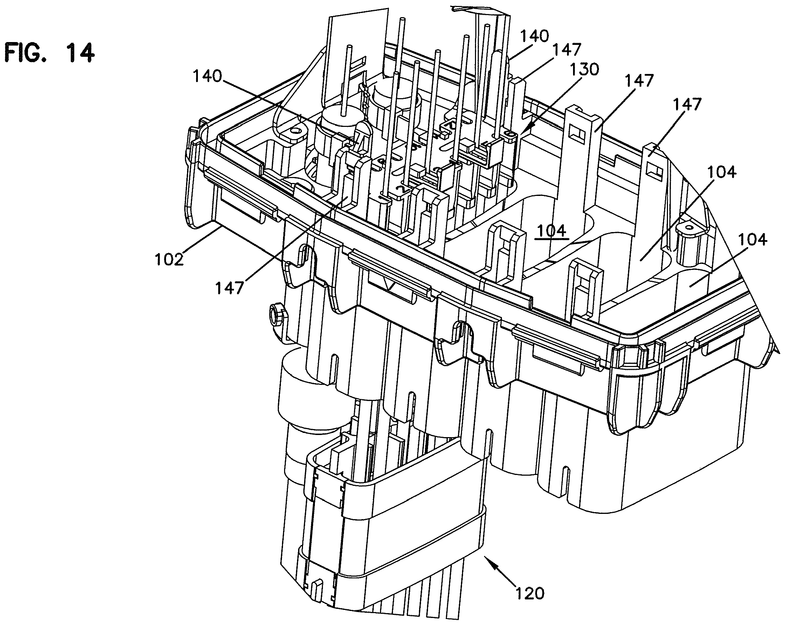

FIGS. 13 and 14 illustrate one advantage that flows from the ability to disconnect the gel block 120 from the retention block 130 using the second mounting arrangement 150. The second mounting arrangement 150 enables the addition, rearrangement, and/or replacement of drop cables 170 (i.e., or blown fiber tubes, etc.) through the sealing and retention arrangement 110 after installation of the sealing and retention arrangement 110 at the base 102 without subjecting the optical fibers 174 of the installed drop cables 170 to axial load. In particular, the second mounting arrangement 150 enables the gel block 120 to be released from the retention block 130 and moved away from the retention block 130 along the axis of the drop cables 170 while the retention block 130 remains connected to the base 102 by the first mounting arrangement.

In some implementations, drop cables 170 are installed at only some of the ports 112 of the sealing and retention arrangement 110 when the sealing and retention arrangement 110 is first installed at the base 102. In certain implementations, filler rods can be inserted at the otherwise empty ports to enable the gel block 120 to form a seal at the port 104. The filler rods can be removed when additional cables are to be added. The separable gel block 120 enables additional cables 170 to be added as the network is expanded. One or more of the drop cables 170 may become damaged subsequent to installation of the sealing and retention arrangement 110. In such implementations, the separable gel block 120 enables the removal of the damaged cable 170 without disconnecting the remaining cables 170 from the base 102. A replacement cable 170 can then be added to the sealing and retention arrangement 110. In certain implementations, the drop cables 170 may be arranged incorrectly within the ports 112 (i.e., the drop cable that should extend through port "4" actually extends through port "7"). In such implementations, the separable gel block 120 enables each of the affected cables 170 to be moved from one port 112 to another as desired.

As shown, the retaining arms 141 of the retention block 130 remain engaged with the retainers 147 of the base 102 when the second mounting arrangement 150 is removed. Accordingly, the retention block 130 remains within the port 104 of the base 102. The spring clip 133 of the retention block 130 continues to hold the drop cables 170 in axially fixed positions as will be described in more detail herein. The gel block 120 can be deactivated sufficient to decompress the gel seal 124 to allow sliding of the gel block 120 along the drop cables 170. Removing the sliding clip members 151 from the sealing and retention arrangement 110 releases the gel block extensions 128. When released, the gel block extensions 128 can slide through the through-openings 134 of the retention block as the deactivated gel block 120 is slid away from the retention block 130 along the drop cables 170.

The gel block 120 is accessible when the gel block 120 is moved out of the port 104 of the base 102. In some implementations, the wrap-around member 126 can be opened on the intermediate arrangement 121, drop cables 170 can be added, removed, and/or repositioned as desired, and the wrap-around member 126 can be closed around the intermediate arrangement 121. In other implementations, however, the drop cables 170 can be axially slid in and out of the gel block 120 without opening or disassembling the gel block 120 as will be described in more detail herein. Any added or repositioned drop cables 170 can be routed upwardly through the port 104 towards the retention block 130 and slid laterally into appropriate open-ended slots 135-137 of the retention block 130. When the drop cables 170 are correctly positioned within the gel block 120 and retention block 130, the gel block 120 is slid back into the port 104 so that the extensions 128 pass through the through-openings 134. The clip members 151 are slid back into position to lock the gel block 120 to the retention block 130 (e.g., see FIG. 4).

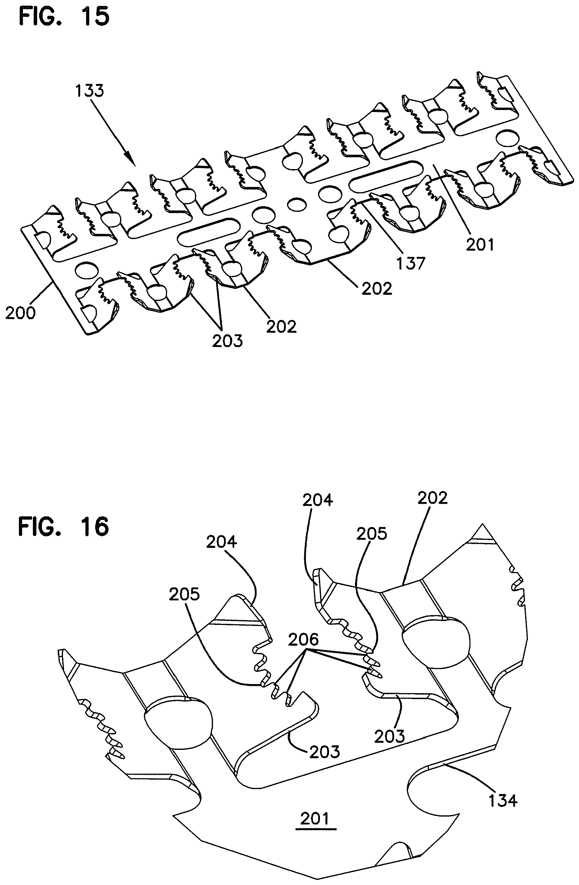

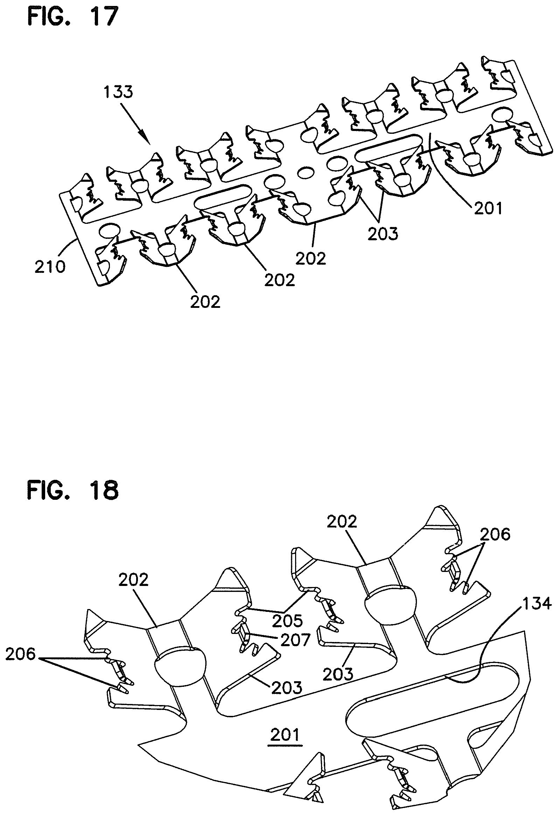

FIGS. 15-18 illustrate alternative implementations of spring clip arrangements 133 suitable for use with the retention block 130 described herein. One alternative spring clip arrangement 200 includes a base 201 from which flanges 202 extend at opposite sides of a periphery of the base 201. In certain implementations, the base 201 defines the through-openings 134. The flanges 202 extend parallel to each other at spaced positions along the opposite sides of the periphery to define the slots 137. Sprung tabs 203 extend outwardly from each flange 202. In certain implementations, the tabs 203 extend towards the tabs 203 of adjacent flanges 202. In other implementations, the spring clip arrangement 200 can be formed from multiple bases 201 that each include two or more flanges 202 from which tabs 203 extend.

The tabs 203 are oriented to extend from the flanges 202 at an angle towards the first piece 131 of the retention block 130. Accordingly, when a drop cable 170 is mounted within the slot 137 between two tabs 203, the tabs 203 inhibit axial movement of the cable 170 towards the second piece 132 of the retention block 130. In some implementations, the tabs 203 define tapered outer surfaces to facilitate lateral sliding of the cables 170 into the slots 137. In other implementations, portions 204 of the tabs 203 are bent upwardly to facilitate sliding of the cables 170 into the slots 137 (see FIG. 16). In some implementations, the tabs 203 define cutout portions 205 that align with the cutout portions 205 of adjacent tabs 203 to define a cable receiving region of the slot 137. In certain implementations, teeth 206 can be provided along the cutout portions 205 to further aid in retaining the drop cables in axially fixed positions relative to the base 201.

Another alternative spring clip arrangement 210 is substantially similar to the spring clip arrangement 200, except that an angled or bent finger 207 is provided at the cutout region 205 of each tab 203. The bent finger 207 angles upwardly from the tab 203 towards the first piece 131 of the retention block 130. The bent finger 207 provides further inhibition against axial sliding of the drop cables 170 within the cable receiving region in a direction towards the second piece 132 of the retention block 130.

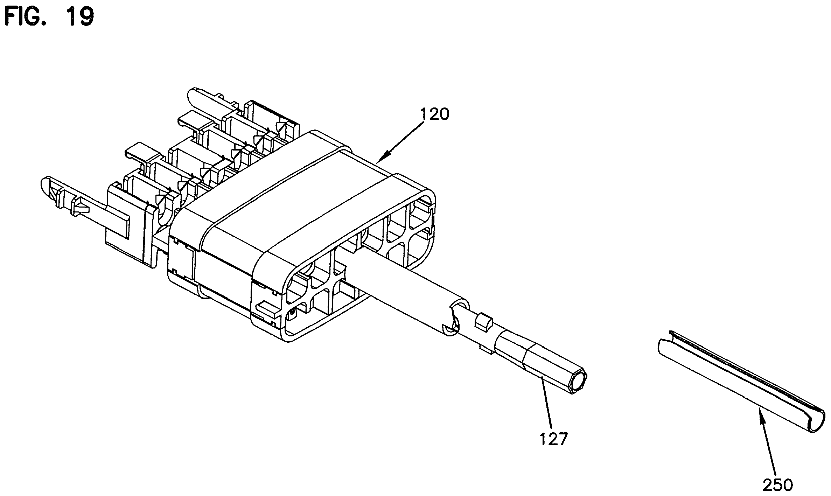

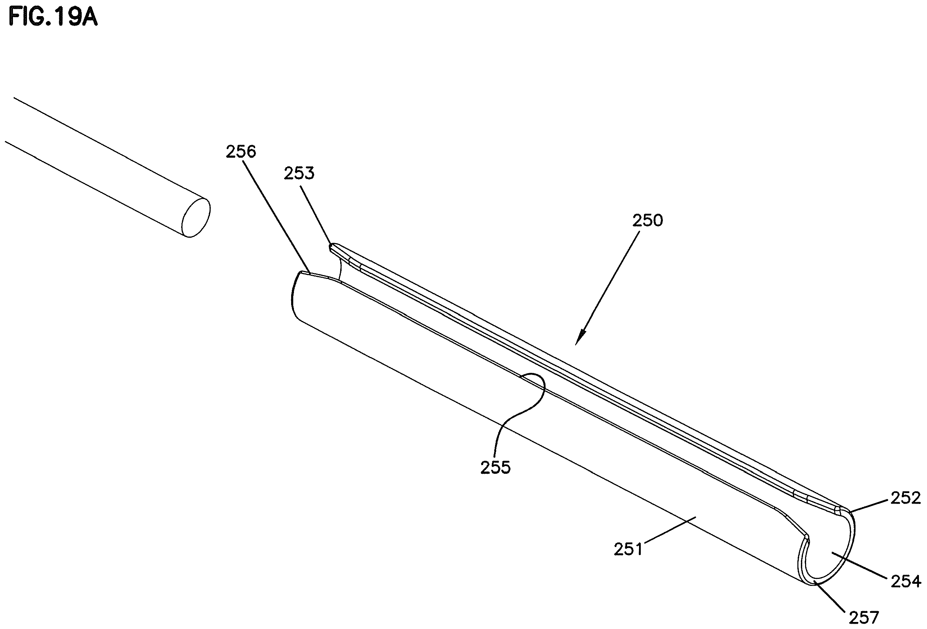

FIGS. 19-23 illustrate an example tool 250 for facilitating insertion of a cable (e.g., a drop cable 170) through a gel block (e.g., gel block 120). The tool 250 is used when the gel block 120 is deactivated to release the gel seal 124 of the gel block 120. The gel seal 124 may not release immediately. Accordingly, the passages through the gel seal 124 can remain narrow relative to the cable to be inserted. The gel seal 124 also can catch on exposed optical fibers 174 of the cable 170 as the cable 170 is passed through the gel seal 124. Furthermore, the outer jacket 172 of the cable 170 may damage or catch on the gel seal 124 as the cable 170 is slid through the gel seal 124.

The tool 250 facilitates insertion of a cable through the gel block 120. For example, the tool 250 is configured to be slid through the gel seal 124 without damaging the gel seal 124. Furthermore, the tool 250 inhibits contact between the optical fiber 174 of the cable 170 and the gel seal 124 of the gel block 120. In certain implementations, the tool 250 aids insertion of a cable 170 through a gel block 120 without disassembling the gel block 120. In some implementations, the tool 250 can aid insertion of a cable through a gel block 120 that is mounted at a cable port 104 of a base 102. In other implementations, the tool 250 aids in the insertion of a cable through a gel block 120 that is disconnected and displaced from the base 102.

The tool 250 is shown in FIG. 19A as a single-piece annular body 251 extending from a first axial end 252 to a second axial end 253. The annular body 251 defines a channel or passage 254 that extends between the axial ends 252, 253 of the body 251. A slot 255 is defined through the annular body 251 to provide radial access to the passage 254. The slot 255 can define tapered sections 256 that taper outwardly at the axial ends 252, 253 of the body 251 to aid insertion/removal of a cable into the slot 255. In certain implementations, the body 251 is formed of a material that is sufficiently flexible to enable expansion of the slot 255 to facilitate insertion/ removal of a cable into/out of the passage 254.

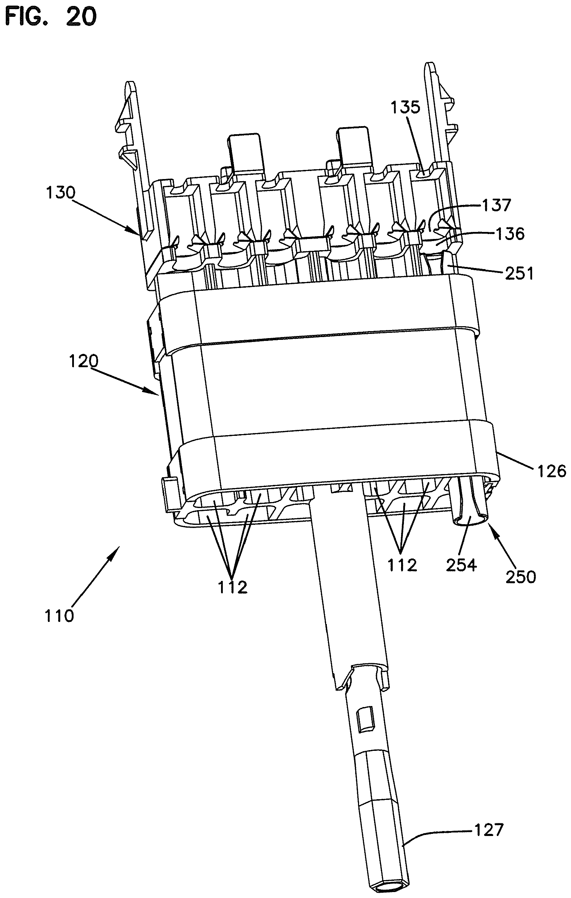

As shown in FIG. 20, the tool 250 is inserted into one port of a deactivated gel block 120. In the example shown, the tool 250 is inserted into one of the ports 112 of a sealing and retention device 110 while the gel block 120 is connected to the retention block 130. In other implementations, however, the tool 250 can be inserted into a detached gel block 120 or into a gel block that is not integrated with a retention block. In some implementations, the tool 250 is inserted into the gel block 120 while the gel block 120 is disposed in the cable port 104. In other implementations, the tool 250 can be inserted into the gel block 120 while the gel block 120 is disposed outside of the port 104.

To insert the tool 250, one end 252, 253 of the tool body 251 is slid through the bottom plate 123 of the gel block 120 and into the gel seal 124 of the gel block 120. In certain implementations, one or both ends 252, 253 of the tool body 251 defines a contoured (e.g., rounded) edge 257 to avoid tearing or otherwise damaging the gel seal 124 as the tool body 251 passes through the gel seal 124. The tool body 251 is inserted through the gel block 120 until one end 252, 253 protrudes through the top plate 122 of the gel block 120 and the other end 252, 253 protrudes through the bottom plate 123 of the gel block 120.

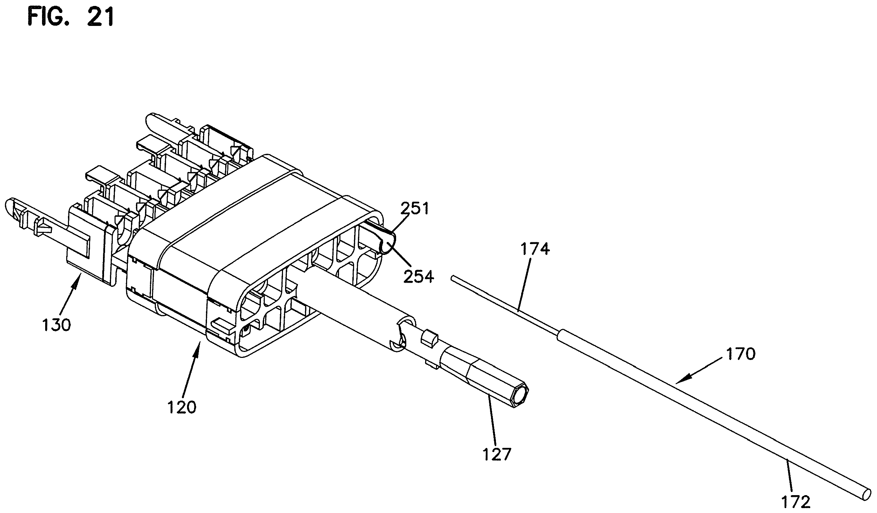

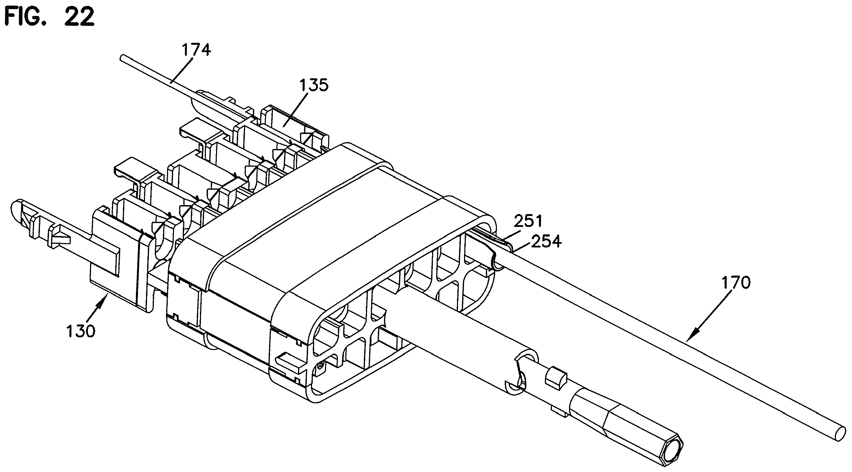

As shown in FIGS. 21 and 22, the cable 170 to be inserted can include bare optical fiber 174 or a buffered optical fiber extending from an outer jacket 170. The bare or buffered optical fiber 174 can be inserted into and slid along the passage 254 of the tool body 251. The tool body 251 holds the passage through the gel seal 124 open for the cable 170. In certain implementations, the tool body 251 may expand the passage through the gel seal 124. The tool body 251 inhibits contact between the cable fiber 174 and the gel seal 124 to accommodate the cable 170. The tool body 251 also inhibits contact between the cable jacket 172 and the gel seal 124. When the cable 170 has been routed through the gel block 120, the gel block 120 can be activated to compress the gel seal 124, thereby sealing against the cable 170 and against the inner wall of the port 104.

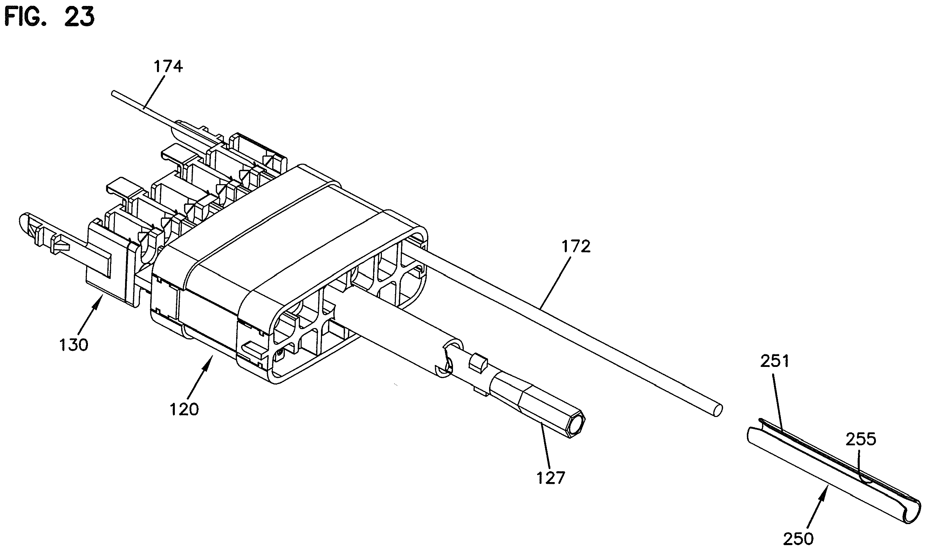

As shown in FIG. 23, the tool 250 can be removed from the gel block 120 after the cable 170 has been inserted therethrough. In certain implementations, the tool 250 is removed after the cable 170 has been secured to the retention block 130. In certain implementations, the tool 250 is removed before activation of the gel block 120. The tool 250 is removed by sliding the tool body 251 out of the gel block port and away from the retention block 130 or closure 100. The tool body 251 slides axially along the cable 170. When the tool body 251 clears the gel block 120, the tool body 251 can be removed from the cable 170 by sliding the cable 170 through the slot 255 in the tool body 251. The tool 250 can be reused to insert additional cables into other gel block ports.

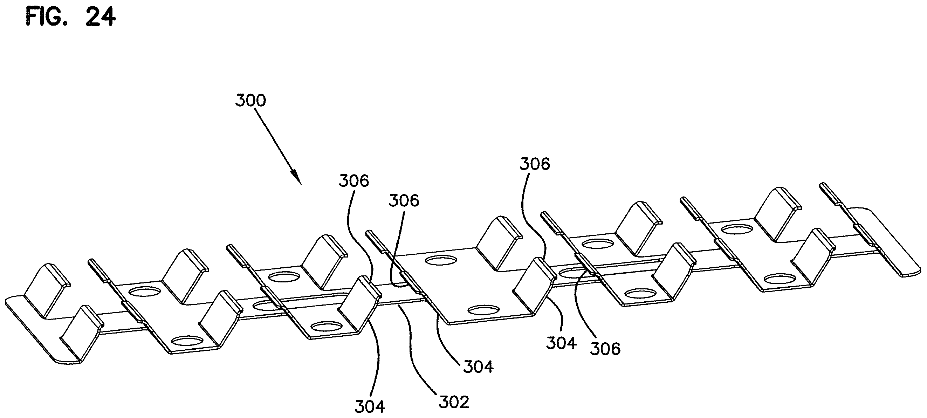

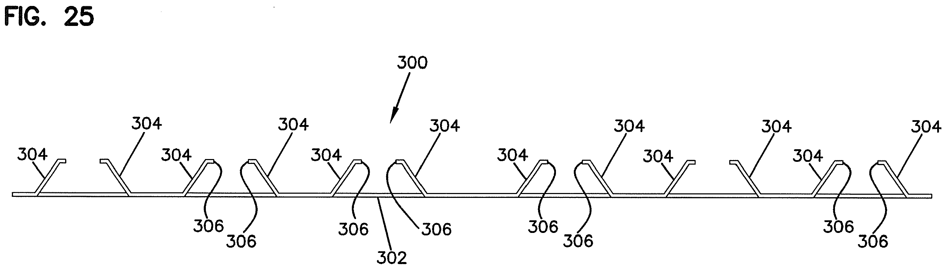

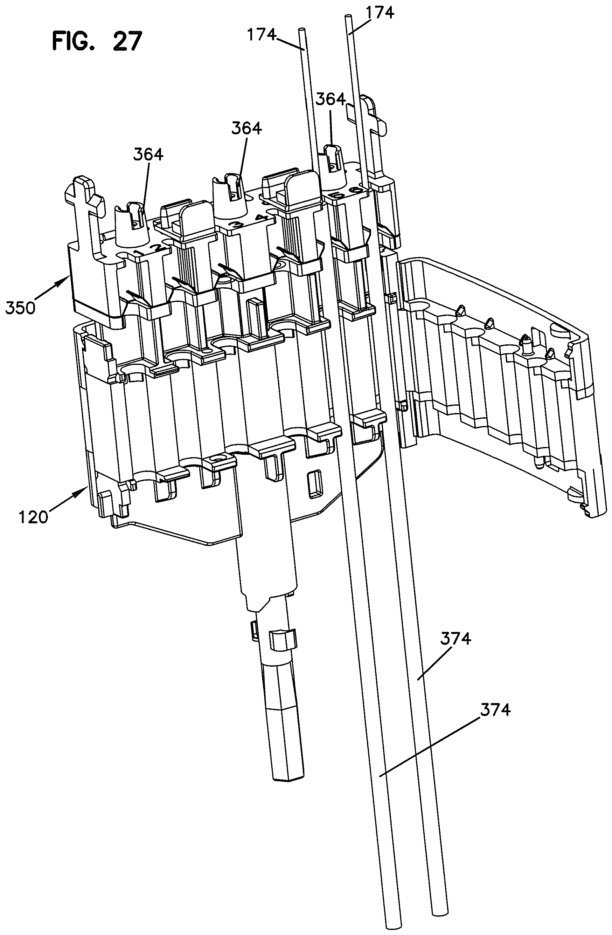

FIGS. 24-27 show an alternative spring clip arrangement 300 including a planar portion 302 and angled tabs 304. At a distal end of each tab 304 is a planar edge 306 which is parallel to the planar portion 302. Each planar edge 306 is linear. The shape of planar edges of 306 of spring clip arrangement 300 may reduce the amount of cutting into the jacket, or the other cable structure, to prevent internal cable damage.

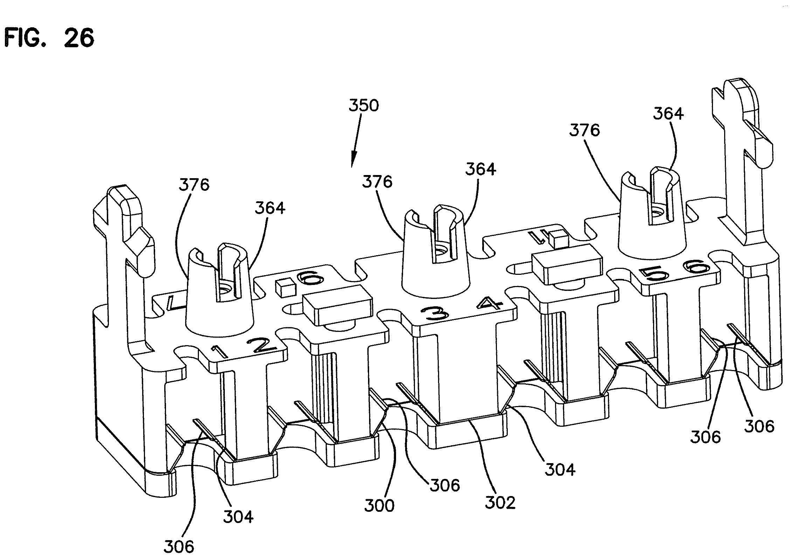

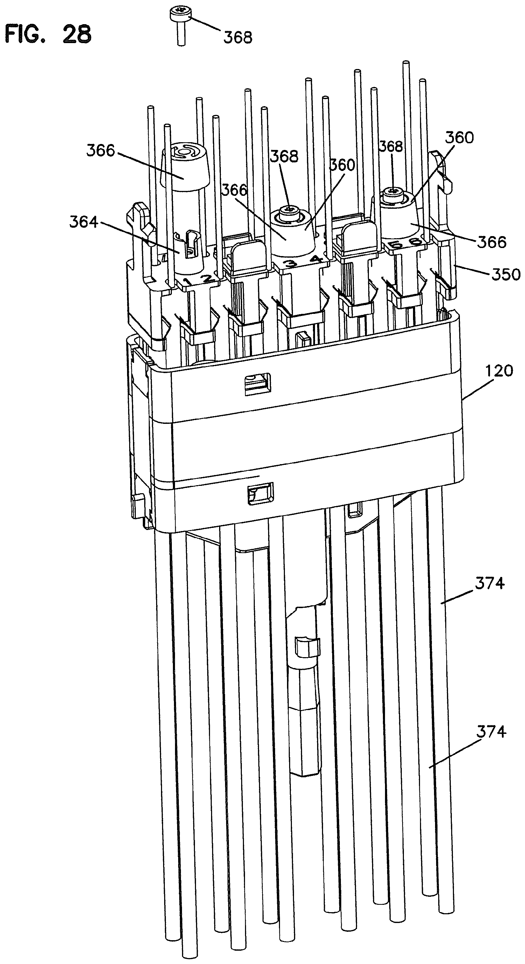

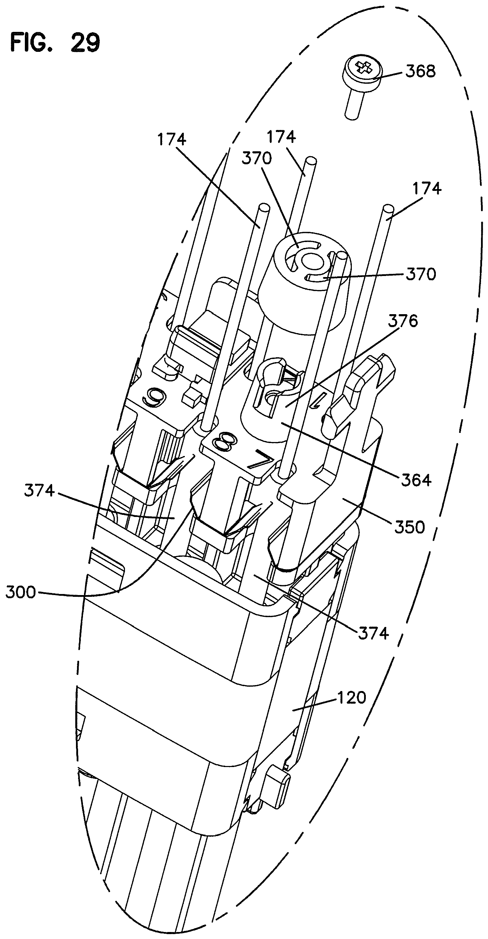

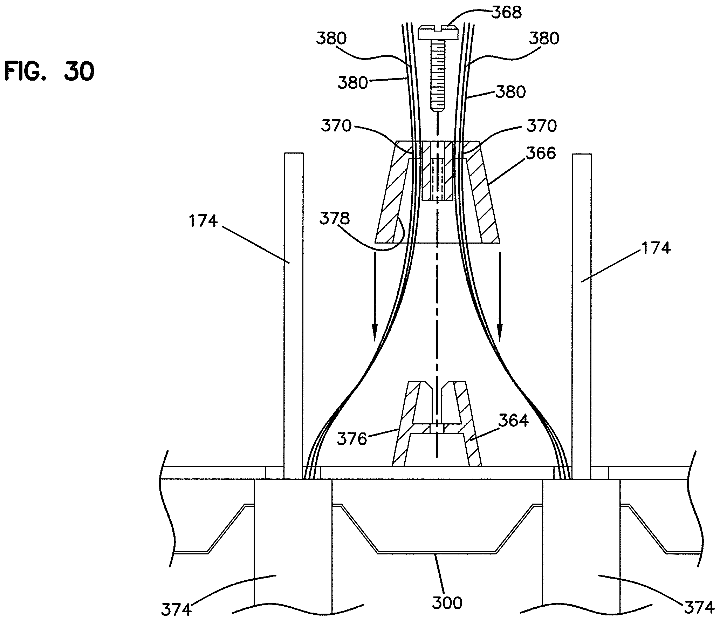

Referring now to FIGS. 26-30, a cable retention block 350 includes a strength member fixation arrangement 360. Each block 350 includes three fixation arrangements 360. Each fixation arrangement 360 includes a conical portion 364 and a conical cap 366 held in place by a fastener 368. Cap 366 includes one or more apertures 370 for receipt of strength members (such as aramid strength members) from one or more cables 374. The aramid strength members (such as a plurality of aramid fibers) are positioned between an outer surface 376 of conical portion 364 and an inner conical surface 378 of cap 366. Fastener 368 is tightened down to compress cap 366 against conical portion 376 to fix the aramid strength members 380 of each cable. Each conical portion 364 and conical cap 366 can secure four cables in the illustrated embodiment. Apertures 370 each receive aramid fibers 380 from two cables in the illustrated example.

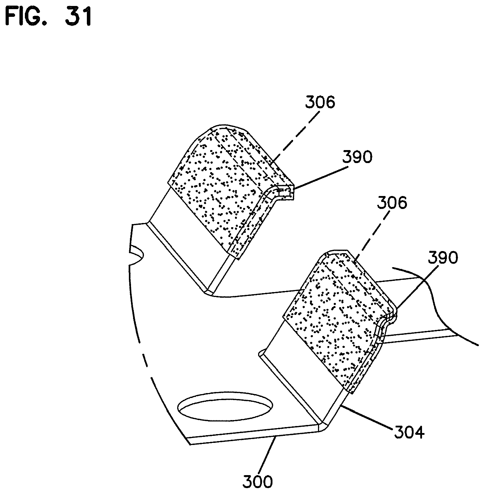

Referring now to FIG. 31, spring clip arrangement 300 is shown with a coating 309 on edges 306 and angled tabs 304. The main body of spring clip arrangement 300 may be made from metal. Coating 309 may be useful in preventing or limiting edges 306 from cutting into the cables and causing damage by cutting too deeply. The coating 309 can be just on edges 306 or more of spring clip arrangement 300, or entirely covering the spring clip arrangement 300.

Coating 309 can be formed by dipping or painting. An acrylate can be used. For example, a mixture of acrylate, fillers (such as barium sulfate) and water can be used. An example thickness can be 0.5 to 1.0 mm, or more or less as desired.

The coating 309 can be useful in preventing excessive damage to the cables. Also, the coating 309 can provide an increased frictional gripping force on the cable to improve retention.

The above specification, examples and data provide a complete sealing and retention arrangement description of the manufacture and use of the composition of the invention. Since many embodiments of the invention can be made without departing from the scope of the invention, the invention resides in the claims hereinafter appended.

### List of Reference Numerals and Corresponding Features

- 100: cable closure
- 102: base
- 103: feeder port
- 104: drop port
- 105: dome
- 106: seal
- 108: cable organizer
- 109: management trays
- 110: sealing and retention arrangement
- 112: passages
- 120: a gel block
- 121: intermediate arrangement
- 122: top plate
- 123: bottom plate
- 124: gel seal
- 125: rod
- 126: wrap-around member
- 127: activation device
- 128: extensions
- 129: slots
- 130: cable retention block
- 131: first piece
- 132: second piece
- 133: spring clip arrangement
- 134: through-openings
- 135: open-ended slots in first piece
- 136: open-ended slots in second piece
- 137: open-ended slots in spring clip
- 138: sprung flanges
- 139: labels
- 140: first mounting arrangement
- 141: retaining arms on retention block
- 142: latching arrangements on arms
- 143: latching stop
- 144: latching recess
- 145: latching hook
- 146: grip portion
- 147: retainer
- 148: aperture
- 149: seating surface
- 150: second mounting arrangement
- 151: sliding clip members
- 152: slots
- 153: handles
- 155: attachment members
- 156: narrow section
- 157: top section
- 158: fingers
- 158a: bumps
- 159: block members
- 160: feeder cable
- 170: cables (e.g., drop cables/blown fiber tubes)
- 172: jackets
- 174: fibers
- 200: spring clip arrangement
- 201: base
- 202: flanges
- 203: tabs
- 204: bent portions
- 205: cutout portions
- 206: teeth
- 207: bent finger
- 210: spring clip arrangement
- 250: tool
- 251: annular body
- 252: first axial end
- 253: second axial end
- 254: passage
- 255: slot
- 256: tapered sections
- 257: rounded edge
- 300: spring clip arrangement
- 302: planar portion
- 304: angled tabs
- 306: planar edge
- 350: cable retention block
- 360: strength member fixation arrangement
- 364: conical portion
- 366: conical cap
- 368: fastener
- 370: apertures
- 374: cables
- 376: outer conical surface
- 378: inner conical surface
- 380: aramid strength members
- 390: coating

## Claims

1. A cable closure system (100) comprising:
a base (102) defining at least one drop cable port (104), the base (102) having a cable organizer (108) attached thereto;
a dome (105) mountable to the base (102) to cover the cable organizer (108), the dome (105) being configured to sealingly engage the base (102) when mounted to the base (102);
a sealing and retention arrangement (110) mountable to the base (102) at the drop cable port (104), the sealing and retention arrangement (110) including:
a gel block (120) configured to be disposed within the drop cable port (104), the gel block (120) being configured to seal a plurality of drop cables (170) within the drop cable port (104);
a cable retention block (130) for receipt at the drop cable port (104), the cable retention block (130) having a plurality of open-ended, outwardly-facing slots, each of which is configured to retain one of the plurality of drop cables (170) sealed by the gel block (120);
a first mounting arrangement (140) for mounting the cable retention block (130) to the base (102);
**characterised in that** the cable closure system further comprises:
a second mounting arrangement (150) for releasably mounting the gel block (120) to the cable retention block (130), wherein releasing the gel block (120) from the retention block (130) and deactivating the gel block (120) enables the gel block (120) to be removed from the drop cable port while the retention block (130) remains attached to the base (102) by the first mounting arrangement (140).

2. The cable closure system of claim 1, wherein the gel block (120) includes a wrap-around device (126) and an intermediate arrangement (121) that cooperate to define ports therethrough, the intermediate arrangement (121) including gel seal (124) sandwiched between top and bottom plates (122, 123), wherein the gel block (120) further includes a rod (125) and activation device (127) that cooperate to compress and release the gel seal (124) between the plates (122, 123).

3. The cable closure system of either of claims 1 or 2, wherein the cable retention block (130) includes a spring clip arrangement (133) that defines cable receiving regions (205), the spring clip (133) inhibiting axial sliding movement of the drop cables through the cable receiving regions (205).

4. The cable closure system of claim 3, wherein the spring clip (133) includes angled tabs (203) at the cable receiving regions (205) to further inhibit axial movement.

5. The cable closure system of claim 3, wherein the spring clip (133) includes teeth (206) at the cable receiving regions (205) to further inhibit axial movement.

6. The cable closure system of claim 3, wherein the spring clip (133) includes planar edges (306) at the cable receiving regions (205) to further inhibit axial movement.

7. The cable closure system of any of claims 1-6, wherein the first mounting arrangement (140) includes flexible arms (141) that each define a latching arrangement (142) at a distal end configured to mount to a retainer (147) at the base (102).

8. The cable closure system of claim 7, wherein each latching arrangement (142) includes a latching hook (145) and a grip member (146) for mounting over a shoulder (149) of a respective retainer (147) at the base (102).

9. The cable closure system of claim 8, wherein each latching arrangement (142) also includes a latching stop (143) and a latching recess (144) for engagement with an aperture (148) defined in the respective retainer (147).

10. The cable closure system of any of claims 1-9, wherein the second mounting arrangement (150) includes:
arms (128) extending from the gel block (120), the arms (128) being sized to fit within through-openings (134) defined through the retention block (130), the arms (128) defining slots (129) at distal ends; and
sliding clip members (151) including fingers (158) configured to slide through the slots (129) of the arms (128) when the distal ends of the arms (128) extend outwardly from the through-openings (134) of the retention block (130) to hold the gel block (120) to the retention block (130).

11. The cable closure system of claim 10, wherein the second mounting arrangement (150) also includes attachment members (155) disposed at the retention block (130) adjacent the through-openings (134), wherein the fingers (158) of the clip members (151) also extend around narrow sections (156) of the attachment members (155) and beneath top sections (157) of the attachment members (155) to hold the clip members (151) to the retention block (130).

12. The cable closure system of any of claims 1-11, further comprising a strength member fixation arrangement (360) including a conical clamp (364, 366).

13. The cable closure system of claims 3-6, wherein the spring clip (133) includes a coating (309).

14. The cable closure system (100) of any of claims 1-13, further comprising a plurality of separately mounted sealing and retention arrangements (110) mountable to the base (102) at one of a plurality of drop cable ports (104).

15. A method of using a cable closure system (100) comprising:
providing a cable closure system (100) including:
a base (102) defining a port (104);
a plurality of cables (170) entering the base (102) through the port (104);
a gel block (120) for receipt in the port (104), the gel block (120) providing a gel seal (124) around the plurality of cables (170) and against inner walls of the port (104);
a cable retention block (130) for receipt in the port (104), the cable retention block (130) having a plurality of open-ended, outwardly facing slots, each slot providing access to a spring clip (133) for retaining one of the plurality of cable at the port (104);
a first mounting arrangement (140) for releasably mounting the cable retention block (130) to the base (102); and
a second mounting arrangement (150) for releasably mounting the gel block (120) to the cable retention block (130);
releasing the second mounting arrangement (150) to disconnect the gel block (120) from the retention block (130);
deactivating the gel block (120) to decompress the gel seal (124);
sliding the gel block (120) out of the port (104) and away from the cable retention block (130);
adding a new cable within the port (104);
sliding the gel block (120) back into the port (104);
remounting the gel block (120) to the cable retention block (130) with the second mounting arrangement (150); and
reactivating the gel seal (124).

## Patentansprüche

1. Ein Kabelverschlusssystem (100), das Folgendes beinhaltet:
einen Sockel (102), der mindestens einen Verbindungskabelanschluss (104) definiert, wobei der Sockel (102) daran angebracht einen Kabel-Organizer (108) aufweist;
eine Haube (105), die an dem Sockel (102) befestigt werden kann, um den Kabel-Organizer (108) abzudecken, wobei die Haube (105) konfiguriert ist, um mit dem Sockel (102) abdichtend in Eingriff zu sein, wenn sie an dem Sockel (102) befestigt ist;
eine Abdichtungs- und Halteanordnung (110), die an dem Verbindungskabelanschluss (104) an dem Sockel (102) befestigt werden kann, wobei die Abdichtungs- und Halteanordnung (110) Folgendes umfasst:
einen Gelblock (120), der konfiguriert ist, um innerhalb des Verbindungskabelanschlusses (104) angeordnet zu sein, wobei der Gelblock (120) konfiguriert ist, um eine Vielzahl von Verbindungskabeln (170) innerhalb des Verbindungskabelanschlusses (104) abzudichten;
einen Kabelhalteblock (130) zur Aufnahme an dem Verbindungskabelanschluss (104), wobei der Kabelhalteblock (130) eine Vielzahl von am Ende offenen, nach außen zeigenden Schlitzen aufweist, die jeweils konfiguriert sind, um eines der Vielzahl von Verbindungskabeln (170), die von dem Gelblock (120) abgedichtet werden, zu halten;
eine erste Befestigungsanordnung (140) für das Befestigen des Kabelhalteblocks (130) an dem Sockel (102);
**dadurch gekennzeichnet, dass** das Kabelverschlusssystem ferner Folgendes beinhaltet:
eine zweite Befestigungsanordnung (150) für das lösbare Befestigen des Gelblocks (120) an dem Kabelhalteblock (130), wobei das Lösen des Gelblocks (120) von dem Halteblock (130) und das Deaktivieren des Gelblocks (120) es dem Gelblock (120) ermöglichen, von dem Verbindungskabelanschluss entfernt zu werden, während der Halteblock (130) durch die erste Befestigungsanordnung (140) an dem Sockel (102) befestigt bleibt.

2. Kabelverschlusssystem gemäß Anspruch 1, wobei der Gelblock (120) eine Einfassungsvorrichtung (126) und eine Zwischenanordnung (121) umfasst, die kooperieren, um Anschlüsse dort hindurch zu definieren, wobei die Zwischenanordnung (121) eine zwischen einer oberen und einer unteren Platte (122, 123) eingelegte Geldichtung (124) umfasst, wobei der Gelblock (120) ferner eine Stange (125) und eine Aktivierungsvorrichtung (127) umfasst, die kooperieren, um die Geldichtung (124) zwischen den Platten (122, 123) zu komprimieren und zu lösen.

3. Kabelverschlusssystem gemäß Anspruch 1 oder 2, wobei der Kabelhalteblock (130) eine Federklemmenanordnung (133) umfasst, die Kabelaufnahmebereiche (205) definiert, wobei die Federklemme (133) eine axiale Gleitbewegung der Verbindungskabel durch die Kabelaufnahmebereiche (205) hemmt.

4. Kabelverschlusssystem gemäß Anspruch 3, wobei die Federklemme (133) abgewinkelte Laschen (203) an den Kabelaufnahmebereichen (205) umfasst, um eine axiale Bewegung weiter zu hemmen.

5. Kabelverschlusssystem gemäß Anspruch 3, wobei die Federklemme (133) Zähne (206) an den Kabelaufnahmebereichen (205) umfasst, um eine axiale Bewegung weiter zu hemmen.

6. Kabelverschlusssystem gemäß Anspruch 3, wobei die Federklemme (133) plane Kanten (306) an den Kabelaufnahmebereichen (205) umfasst, um eine axiale Bewegung weiter zu hemmen.

7. Kabelverschlusssystem gemäß einem der Ansprüche 1-6, wobei die erste Befestigungsanordnung (140) flexible Arme (141) umfasst, die jeweils an einem distalen Ende eine Verriegelungsanordnung (142) definieren, die konfiguriert ist, um an einem Halter (147) an dem Sockel (102) befestigt zu werden.

8. Kabelverschlusssystem gemäß Anspruch 7, wobei jede Verriegelungsanordnung (142) einen Verriegelungshaken (145) und ein Greifelement (146) für das Befestigen über eine Ansatzfläche (149) eines jeweiligen Halters (147) an dem Sockel (102) umfasst.

9. Kabelverschlusssystem gemäß Anspruch 8, wobei jede Verriegelungsanordnung (142) ebenfalls eine Verriegelungssperre (143) und eine Verriegelungskerbe (144) für den Eingriff in einen in dem jeweiligen Halter (147) definierten Ausschnitt (148) umfasst.

10. Kabelverschlusssystem gemäß einem der Ansprüche 1-9, wobei die zweite Befestigungsanordnung (150) Folgendes umfasst:
Arme (128), die sich von dem Gelblock (120) erstrecken, wobei die Arme (128) so bemessen sind, dass sie in durch den Halteblock (130) definierte Durchgangsöffnungen (134) passen, wobei die Arme (128) an distalen Enden Schlitze (129) definieren; und gleitende Klemmenelemente (151), die Finger (158) umfassen, die konfiguriert sind, um durch die Schlitze (129) der Arme (128) zu gleiten, wenn sich die distalen Enden der Arme (128) von den Durchgangsöffnungen (134) des Halteblocks (130) nach außen erstrecken, um den Gelblock (120) an dem Halteblock (130) zu halten.

11. Kabelverschlusssystem gemäß Anspruch 10, wobei die zweite Befestigungsanordnung (150) ebenfalls Anbringungselemente (155) umfasst, die an dem Halteblock (130) neben den Durchgangsöffnungen (134) angeordnet sind, wobei sich die Finger (158) der Klemmenelemente (151) ebenfalls um enge Abschnitte (156) der Anbringungselemente (155) herum und unter oberen Abschnitten (157) der Anbringungselemente (155) erstrecken, um die Klemmenelemente (151) an dem Halteblock (130) zu halten.

12. Kabelverschlusssystem gemäß einem der Ansprüche 1-11, ferner beinhaltend eine Festigkeitselement-Fixierungsanordnung (360), die eine konische Klammer (364, 366) umfasst.

13. Kabelverschlusssystem gemäß einem der Ansprüche 3-6, wobei die Federklemme (133) einen Überzug (309) umfasst.

14. Kabelverschlusssystem (100) gemäß einem der Ansprüche 1-13, ferner beinhaltend eine Vielzahl von separat befestigten Abdichtungs- und Halteanordnungen (110), die an einem einer Vielzahl von Verbindungskabelanschlüssen (104) an dem Sockel (102) befestigt werden können.

15. Ein Verfahren zur Verwendung eines Kabelverschlusssystems (100), das Folgendes beinhaltet:
Bereitstellen eines Kabelverschlusssystems (100), das Folgendes umfasst:
einen Sockel (102), der einen Anschluss (104) definiert;
eine Vielzahl von Kabeln (170), die durch den Anschluss (104) in den Sockel (102) eintreten;
einen Gelblock (120) zur Aufnahme in dem Anschluss (104), wobei der Gelblock (120) eine Geldichtung (124) um die Vielzahl der Kabel (170) herum und gegen Innenwände des Anschlusses (104) bereitstellt;
einen Kabelhalteblock (130) zur Aufnahme in dem Anschluss (104), wobei der Kabelhalteblock (130) eine Vielzahl von am Ende offenen, nach außen zeigenden Schlitzen aufweist, wobei jeder Schlitz Zugang zu einer Federklemme (133) bereitstellt, um eines der Vielzahl von Kabeln an dem Anschluss (104) zu halten;
eine erste Befestigungsanordnung (140) für das lösbare Befestigen des Kabelhalteblocks (130) an dem Sockel (102); und
eine zweite Befestigungsanordnung (150) für das lösbare Befestigen des Gelblocks (120) an dem Kabelhalteblock (130);
Lösen der zweiten Befestigungsanordnung (150), um den Gelblock (120) von dem Halteblock (130) zu trennen;
Deaktivieren des Gelblocks (120), um die Geldichtung (124) zu dekomprimieren; Gleitenlassen des Gelblocks (120) aus dem Anschluss (104) heraus und von dem Kabelhalteblock (130) weg;
Hinzufügen eines neuen Kabels innerhalb des Anschlusses (104);
Gleitenlassen des Gelblocks (120) zurück in den Anschluss (104);
Wiederbefestigen des Gelblocks (120) an dem Kabelhalteblock (130) mit der zweiten Befestigungsanordnung (150); und
Reaktivieren der Geldichtung (124).

## Revendications

1. Un système de fermeture de câble (100) comprenant :
une base (102) définissant au moins un orifice de câbles de dérivation (104), la base (102) ayant un organiseur de câbles (108) attaché à celle-ci ;
un dôme (105) pouvant être monté sur la base (102) pour recouvrir l'organisateur de câbles (108), le dôme (105) étant configuré pour se mettre en prise de manière étanche avec la base (102) lorsqu'il est monté sur la base (102) ;
un agencement d'étanchéité et de retenue (110) pouvant être monté sur la base (102) au niveau de l'orifice de câbles de dérivation (104), l'agencement d'étanchéité et de retenue (110) incluant :
un bloc de gel (120) configuré pour être disposé à l'intérieur de l'orifice de câbles de dérivation (104), le bloc de gel (120) étant configuré pour sceller une pluralité de câbles de dérivation (170) à l'intérieur de l'orifice de câbles de dérivation (104) ;
un bloc de retenue de câbles (130) destiné à être reçu au niveau de l'orifice de câbles de dérivation (104), le bloc de retenue de câbles (130) ayant une pluralité de fentes à extrémités ouvertes tournées vers l'extérieur, chacune d'elles étant configurée pour retenir un câble parmi la pluralité de câbles de dérivation (170) scellés par le bloc de gel (120) ;
un premier agencement de montage (140) pour monter le bloc de retenue de câbles (130) sur la base (102) ;
**caractérisé en ce que** le système de fermeture de câble comprend en outre :
un deuxième agencement de montage (150) pour monter de manière libérable le bloc de gel (120) sur le bloc de retenue de câbles (130), dans lequel la libération du bloc de gel (120) par rapport au bloc de retenue (130) et la désactivation du bloc de gel (120) permet au bloc de gel (120) d'être retiré de l'orifice de câbles de dérivation tandis que le bloc de retenue (130) reste attaché à la base (102) par le premier agencement de montage (140).

2. Le système de fermeture de câble de la revendication 1, dans lequel le bloc de gel (120) inclut un dispositif d'enveloppement (126) et un agencement intermédiaire (121) qui coopèrent pour définir des orifices à travers celle-ci, l'agencement intermédiaire (121) incluant un joint de gel (124) pris en sandwich entre des plaques supérieure et inférieure (122, 123), le bloc de gel (120) incluant en outre une tige (125) et un dispositif d'activation (127) qui coopèrent pour comprimer et libérer le joint de gel (124) entre les plaques (122, 123).

3. Le système de fermeture de câble de l'une ou l'autre des revendications 1 ou 2, dans lequel le bloc de retenue de câbles (130) inclut un agencement d'agrafe-ressort (133) qui définit des régions de réception de câbles (205), l'agrafe-ressort (133) empêchant un déplacement coulissant axial des câbles de dérivation à travers les régions de réception de câbles (205).

4. Le système de fermeture de câble de la revendication 3, dans lequel l'agrafe-ressort (133) inclut des pattes inclinées (203) au niveau des régions de réception de câbles (205) pour empêcher plus avant un déplacement axial.

5. Le système de fermeture de câble de la revendication 3, dans lequel l'agrafe-ressort (133) inclut des dents (206) au niveau des régions de réception de câbles (205) pour empêcher plus avant un déplacement axial.

6. Le système de fermeture de câble de la revendication 3, dans lequel l'agrafe-ressort (133) inclut des bords planaires (306) au niveau des régions de réception de câbles (205) pour empêcher plus avant un déplacement axial.

7. Le système de fermeture de câble de n'importe lesquelles des revendications 1 à 6, dans lequel le premier agencement de montage (140) inclut des bras flexibles (141) qui définissent chacun un agencement de verrouillage (142) au niveau d'une extrémité distale configurée pour être montée sur un dispositif de retenue (147) au niveau de la base (102).

8. Le système de fermeture de câble de la revendication 7, dans lequel chaque agencement de verrouillage (142) inclut un crochet de verrouillage (145) et un élément de préhension (146) pour un montage sur un épaulement (149) d'un dispositif de retenue respectif (147) au niveau de la base (102).

9. Le système de fermeture de câble de la revendication 8, dans lequel chaque agencement de verrouillage (142) inclut également un arrêt de verrouillage (143) et un évidement de verrouillage (144) pour une mise en prise avec une ouverture (148) définie dans le dispositif de retenue respectif (147).

10. Le système de fermeture de câble de n'importe lesquelles des revendications 1 à 9, dans lequel le deuxième agencement de montage (150) inclut :
des bras (128) s'étendant à partir du bloc de gel (120), les bras (128) étant dimensionnés pour s'ajuster à l'intérieur d'ouvertures traversantes (134) définies à travers le bloc de retenue (130), les bras (128) définissant des fentes (129) au niveau d'extrémités distales ; et
des éléments formant clips coulissants (151) incluant des doigts (158) configurés pour coulisser à travers les fentes (129) des bras (128) lorsque les extrémités distales des bras (128) s'étendent vers l'extérieur à partir des ouvertures traversantes (134) du bloc de retenue (130) pour maintenir le bloc de gel (120) contre le bloc de retenue (130).

11. Le système de fermeture de câble de la revendication 10, dans lequel le deuxième agencement de montage (150) inclut également des éléments d'attache (155) disposés au niveau du bloc de retenue (130) de façon adjacente aux ouvertures traversantes (134), dans lequel les doigts (158) des éléments formant clips (151) s'étendent également autour de sections étroites (156) des éléments d'attache (155) et sous des sections supérieures (157) des éléments d'attache (155) pour maintenir les éléments formant clips (151) contre le bloc de retenue (130).

12. Le système de fermeture de câble de n'importe lesquelles des revendications 1 à 11, comprenant en outre un agencement de fixation d'élément de renfort (360) incluant une pince conique (364, 366).

13. Le système de fermeture de câble des revendications 3 à 6, dans lequel l'agrafe-ressort (133) inclut un revêtement (309).

14. Le système de fermeture de câble (100) de n'importe lesquelles des revendications 1 à 13, comprenant en outre une pluralité d'agencements d'étanchéité et de retenue montés séparément (110) pouvant être montés sur la base (102) au niveau d'un orifice parmi une pluralité d'orifices de câbles de dérivation (104).

15. Un procédé d'utilisation d'un système de fermeture de câble (100) comprenant :
la fourniture d'un système de fermeture de câble (100) incluant :
une base (102) définissant un orifice (104) ;
une pluralité de câbles (170) pénétrant dans la base (102) à travers l'orifice (104) ;
un bloc de gel (120) destiné à être reçu dans l'orifice (104), le bloc de gel (120) fournissant un joint de gel (124) autour de la pluralité de câbles (170) et contre des parois internes de l'orifice (104) ;
un bloc de retenue de câbles (130) destiné à être reçu dans l'orifice (104), le bloc de retenue de câbles (130) ayant une pluralité de fentes à extrémités ouvertes tournées vers l'extérieur, chaque fente fournissant un accès à une agrafe-ressort (133) pour retenir un câble parmi la pluralité de câbles au niveau de l'orifice (104) ;
un premier agencement de montage (140) pour monter de manière libérable le bloc de retenue de câbles (130) sur la base (102) ; et
un deuxième agencement de montage (150) pour monter de manière libérable le bloc de gel (120) sur le bloc de retenue de câbles (130) ;
la libération du deuxième agencement de montage (150) pour déconnecter le bloc de gel (120) du bloc de retenue de câbles (130) ;
la désactivation du bloc de gel (120) pour décomprimer le joint de gel (124) ;
le coulissement du bloc de gel (120) hors de l'orifice (104) et à l'écart du bloc de retenue de câbles (130) ;
l'ajout d'un nouveau câble à l'intérieur de l'orifice (104) ;
le coulissement du bloc de gel (120) de retour dans l'orifice (104) ;
le remontage du bloc de gel (120) sur le bloc de retenue de câbles (130) avec le deuxième agencement de montage (150) ; et
la réactivation du joint de gel (124).
